# EUROPÄISCHE PATENTSCHRIFT

(11) **EP 1 811 625 B1**
(45) Veröffentlichungstag und Bekanntmachung des Hinweises auf die Patenterteilung: **14.12.2016**
(21) Anmeldenummer: 07100720.7
(22) Anmeldetag: 18.01.2007
(51) Int. Cl.: H02G 3/22, H05K 5/02, H02B 1/50

(54) **Bodenplatte sowie Kabelverteilerschrank mit Bodenplatte**
Baseplate and cable distribution cabinet with baseplate
Plaque de fond tout comme armoire de distribution de câble dotée d'une plaque de fond

(30) Priorität: 18.01.2006 DE 102006002478
(43) Veröffentlichungstag der Anmeldung: 25.07.2007
(73) Patentinhaber: Berthold Sichert GmbH, 12277 Berlin (DE)
(72) Erfinder: Perschon, Helmut, 12277, Berlin (DE); Irmer, Günter, 13055, Berlin (DE)
(74) Vertreter: Weickmann & Weickmann PartmbB

(56) Entgegenhaltungen:
- EP-A- 1 376 795
- DD-A1- 201 078
- DE-A1- 3 014 612
- DE-A1- 10 112 110
- DE-A1- 19 927 517
- DE-C1- 19 851 952
- US-A- 5 243 129

## Beschreibung

### I. Anwendungsgebiet

Die vorliegende Erfindung betrifft eine Bodenplatten-Anordnung gemäß dem Oberbegriff des Anspruchs 1, einen Kabelverteilerschrank, der eine solche Bodenplatten-Anordnung verwendet, sowie ein Verfahren zum Austauschen einer Bodenplatte der Bodenplatten-Anordnung an einem Kabelverteilerschrank.

### II. Technischer Hintergrund

Kabelverteilerschränke dienen beispielsweise in der Kommunikationstechnik dazu, eine Vielzahl von Hausanschlüssen mit den Erdkabeln zu verbinden.

Zu diesem Zweck steht das Gehäuse des Schaltschrankes, in dem sich der Verteilerraum mit den Klemmschienen oder weiteren aktiven elektrischen Komponenten befindet, auf einem hohlen Sockel, der sich zumindest teilweise in den Erdboden hinein erstreckt, und durch den die Erdkabel herangeführt werden.

Aus Gründen des Berührungsschutzes, der Kondenswasserbildung usw. ist als Trennung zwischen dem Verteilerraum und dem Sockelraum, also zwischen dem eigentlichen Schrankgehäuse und dem Sockel, eine Bodenplatte angeordnet, durch den hindurch sich die Erdkabel nach oben in den Verteilerraum hineinerstrecken.

Dabei gibt es eine Reihe von Problemfällen zu berücksichtigen:
Zum einen ist - in der Aufsicht betrachtet - im Gehäuse meist ein Montagegestell montiert, welches die Stabilität des Gehäuses sichert, und an dem die einzelnen Komponenten, insbesondere die Blöcke mit den Klemmleisten, verschraubt sind.

In der Aufsicht betrachtet befinden sich diese Blöcke mit Klemmleisten im vorderen Bereich, etwa in der vorderen Hälfte, des Grundrisses des Gehäuses. Die Erdkabel sollten deshalb die Bodenplatte vorzugsweise in dem hinteren Bereich durchlaufen, um von dort hinter den Klemmleisten auf die notwendige Höhe hochgeführt zu werden.

Theoretisch könnten die Erdkabel auch die Bodenplatte im vorderen Bereich durchdringen, müssten dann aber noch unterhalb der untersten Klemmleiste nach hinten umgebogen werden. Angesichts der Dicke der Erdkabel von meist mehr als 4 cm und der entsprechenden Steifigkeit ist dies prinzipiell schwierig, erst recht jedoch angesichts der beengten Einbauverhältnisse umso schwieriger, je weiter unten am Montagegestell die Klemmleisten beginnen, denn umso weniger hoch ist der für eine Umlenkung nach hinten verbleibende Raum zwischen dem Kabeldurchgang in der Bodenplatte und der untersten Klemmschiene.

Ein anderes Problem ist die Beschädigung von Schaltschränken durch dagegengefahrene Kraftfahrzeuge:
Dabei wird häufig die äußere Schutzbeplankung des Schaltschrankes beschädigt, die relativ leicht ausgetauscht werden kann.

Wenn jedoch auch die Bodenplatte gebrochen ist und ausgetauscht werden muss, ist der Aufwand hierfür sehr groß, da die einzelnen Erdkabel durch Kabeldurchlässe diese Bodenplatte durchdringen und somit vor dem Austausch alle Erdkabel abgeklemmt und der Schaltschrank vom Sockel abgehoben werden muss, bevor eine neue Bodenplatte auf dem Sockel montiert werden kann.

Auch eine lange Abschaltzeit aller an diesem Schaltschrank hängenden Hausanschlüsse ist die Folge.

Im Stand der Technik sind bereits einige Möglichkeiten zur Durchführung von Kabel durch die Bodenplatte des Verteilerschrankes beschrieben:
Aus der DE 198 51 952 C1 ist bereits eine Bodenplatten-Anordnung für einen Schaltschrank bekannt, die zwischen einem (vorauszusetzenden) Sockel und einem Verteilerraum angeordnet ist. Die Bodenplatten-Anordnung umfasst eine Bodenplatte, die aus wenigstens zwei Einzelteilen zusammengesetzt ist, die im zusammengefügten Zustand wenigstens eine Kabeldurchführungsöffnung in der Bodenplatte bilden. Die Bodenplatten-Anordnung umfasst weiterhin ein in der Kabeldurchführungsöffnung angeordnetes Einsatzteil mit einem vertieften mittleren Bereich, in dem mehrere Kabeldurchlässe gebildet sind.

Ferner ist aus der EP 1 36 795 A2 eine Bodenplatten-Anordnung bekannt, die eine Bodenplatte umfasst, die wiederum aus zwei Einzelteilen besteht ist, die im zusammengesetzten Zustand eine Kabeldurchführungsöffnung definieren. Zusätzlich ist ein Aufsatzteil vorgesehen, das auf der Bodenplatte über der Kabeldurchführungsöffnung angeordnet ist und eine Öffnung zur Durchführung eines Kabels aufweist. Die Öffnung im Aufsatzteil dient zur Aufnahme eines Dichtungskörpers zum Abdichten des Freiraums zwischen Energieleitung und Aufsatzteil. Das Aufsatzteil ragt dabei in den Innenraum des Schaltschrankes.

Weiterhin offenbart die DE 101 12 110 A1 eine Bodenplatten-Anordnung mit einer Bodenplatte, in der eine Kabeldurchführungsöffnung gebildet ist, in der wiederum ein Einsatzteil angeordnet ist. Bei der Kabeldurchführungsöffnung handelt es sich um einen zum Rand hin offenen Ausschnitt. Das Einsatzteil besitzt eine Dicke, die der Dicke der Bodenplatte entspricht.

Schließlich offenbart die DD 201 078 A1 eine Bodenplatten-Anordnung mit einer Bodenplatte und einem in einer Ausnehmung der Bodenplatte angeordneten Einsatzteil. Dieses Einsatzteil steht von der Ebene der Bodenplatte vor und bildet einen Aufnahmeraum zur Durchführung von Kabel in den Schaltschrank und zum Fixieren dieser mit einem Vergussstoff. Die Kabel werden dabei parallel zueinander verlaufend fixiert.

### III. Darstellung der Erfindung

### a) Technische Aufgabe

Ausgehend vom Stand der Technik gemäß der DE 198 51 952 C1 war der Fachmann vor die Aufgabe gestellt, eine neuartige Bodenplatten-Anordnung zu schaffen, die einfache und kostengünstig herzustellen ist und unter Beibehaltung einer einfachen und schnellen Austauschbarkeit im Beschädigungsfall die Hindurchführung von Kabel in den Verteilerinnenraum ermöglich und zusätzlich eine flexiblere Kabelführung im Schrankinneren ermöglicht.

### b) Lösung der Aufgabe

Diese Aufgabe wird durch die Ansprüche 1,11 und 12 gelöst. Vorteilhafte Ausführungsformen ergeben sich aus den Unteransprüchen.

Dadurch, dass die Kabeldurchlässe in einem vertieften Mittelbereich der Bodenplatte angeordnet sind, liegt die mittels des Kabeldurchlasses festgelegte Position des Kabels tiefer als das Niveau der Bodenplatte, so dass von dieser festgelegten Position aus die Höhendistanz bis zur Unterkante des ersten Einbauteiles im Verteilerraumes, beispielsweise der untersten Klemmleiste, größer wird und dadurch der Kabeldurchlass in einem in der Aufsicht betrachtet weiter vorn liegenden Grundflächenbereich liegen kann, als dies bei einem geringen Höhenabstand möglich wäre. Dadurch kann die zur Verfügung stehende Grundfläche für Kabeldurchlässe besser genutzt werden und insgesamt eine größere Anzahl von Kabeln vom Sockel in den Verteilerraum hochgeführt und dort verklemmt wird.

Dadurch, dass die Bodenplatte aus mehreren Einzelteilen besteht, werden die in dem beengten Montageraum schlechten Montagebedingungen etwas erleichtert, indem die Unterteilung in Einzelteile so geschieht, dass das Verbiegen und Positionieren der starren Erdkabel im Bereich der Bodenplatte überhaupt möglich bzw. erleichtert wird. Zusätzlich kann die Unterteilung so vorgenommen werden, dass die Bodenplatte aus einem außen umgebenden, vorzugsweise in zwei Hälften aufgeteilten, Rahmen und einem inneren, umschlossenen Einsatzteil besteht.

Im Einsatzteil, welches vorzugsweise aus einem elastischeren Kunststoff als der wesentlich stabilere und härtere Einsatzrahmen besteht, sind die Kabeldurchlässe vorzugsweise als Langlöcher ausgebildet, so dass darin mehrere Kabel nebeneinander untergebracht werden können. Das Einsatzteil ist beispielsweise einstückig, so dass jeder Kabeldurchlass von dem Einsatzteil ringförmig umgeben ist. Insbesondere kann jedoch auch das Einsatzteil in zwei Hälften geteilt werden, wobei die Trennlinie durch die einzelnen Kabeldurchlässe verläuft, ebenso wie bei dem umlaufenden Rahmen die Trennlinie durch die vom Rahmen umschlossene großflächige Öffnung verläuft.

Dies hat den Vorteil, dass bei einem beschädigten Rahmen die beiden Teile des Rahmens horizontal zwischen Sockel und dem darauf aufgebauten Gehäuse abgezogen werden können, und neue Teile wieder eingeschoben und montiert werden können, ohne dass die das Einsatzteil durchlaufenden Kabel abgeklemmt oder gar entfernt werden müssen. Der Schaltschrank muss also hierfür nicht deaktiviert werden.

Sofern auch das Einsatzteil beschädigt ist - was wegen der Lage weiter innen und des elastischeren Materials nur selten der Fall sein wird - kann dies auch beim Einsatzteil so geschehen, sofern das Einsatzteil aus zwei Hälften besteht.

In der Regel ist der umgebende Rahmen auf dem Sockel verschraubt und von oben auf dem Rahmen oder durch den Rahmen hindurch das Montagegestell, an dem die äußere Beplankung eingehängt ist.

Natürlich müssen all diese Verbindungen vorher gelöst werden, damit der Rahmen bzw. dessen Teile entnommen werden kann. Hierzu werden in der Regel die Verschraubungen zwischen Montagegestell und Rahmen einerseits wie Rahmen und Sockel andererseits, die jedoch auch identisch sein können, gelöst und der Montagerahmen relativ zum Sockel etwas mehr beabstandet, um den alten Rahmen bzw. dessen Teile herausziehen und neu einschieben zu können.

Zur besseren Vorfixierung sind die Teile des Rahmens formschlüssig ineinander verhakt oder verrastet, und werden in dieser Stellung dann auf dem Sockel verschraubt.

Falls die Kabeldurchlässe in einem separaten Einsatzteil der Bodenplatte angeordnet sind, ist dieses Einsatzteil gegenüber dem umgebenden Rahmen abgedichtet, vorzugsweise indem es mit seinem Rand von oben auf dem inneren Rand der Öffnung des Rahmens aufliegt und verschraubt ist, und sich in dem Rahmen eine umlaufende Nut mit eingelegter Dichtung, beispielsweise einer O-Ringdichtung, befindet.

Während die Bodenfläche eines Schaltschrankes in der Regel länglich mit einer Längsachse quer zum Betrachter liegend verläuft, sind die langlochförmigen Kabeldurchlässe vorzugsweise quer stehend hierzu, also mit ihrer Längsachse in Blickrichtung des davor stehenden Bedieners, angeordnet. Zum Zwecke der Abdichtung und auch damit die äußere Isolierung der Kabel nicht an den Kanten der Kabeldurchlässe scheuern, sind die einzelnen Kabel in Kabeltüllen aus Gummi oder einem gummiartigen Kunststoff eingefasst, die mit ihren äußeren Rändern vorzugsweise formschlüssig in den Kabeldurchlässen verankert sind.

Bei einer langlochförmigen Kabeldurchlass weist jede Kabeltülle vorzugsweise in Längsrichtung des Langloches liegend mehrere Tüllenstutzen hintereinander für die mehreren darin unterzubringenden Kabel auf, die jeweils kegelförmig ausgebildet sind, und entsprechend der Dicke des hindurchzuführenden Kabels auf der dementsprechenden Höhe des Kegels aufgeschnitten werden.

Da bereits die Tüllenstutzen eine gewisse Stabilität besitzen und die Querpositionierung der Kabel bewirken, werden die Tüllenstutzen vorzugsweise mit der Erstreckung des Kegels von dem Kabeldurchlass aus nach unten eingesetzt, um das Höhenniveau der Fixierung der Kabel möglichst niedrig zu legen.

### c) Ausführungsbeispiele

Ausführungsformen gemäß der Erfindung sind im Folgenden beispielhaft näher beschrieben. Es zeigen:
- Fig. 1:: eine perspektivische Ansicht eines Schaltschrankes mit Bodenplatte ohne Einsatzteil; und
- Fig. 2:: eine perspektivische Ansicht eines Schaltschrankes mit Bodenplatte mit Einsatzteil.

### d) Beschreibung der Ausführungsform

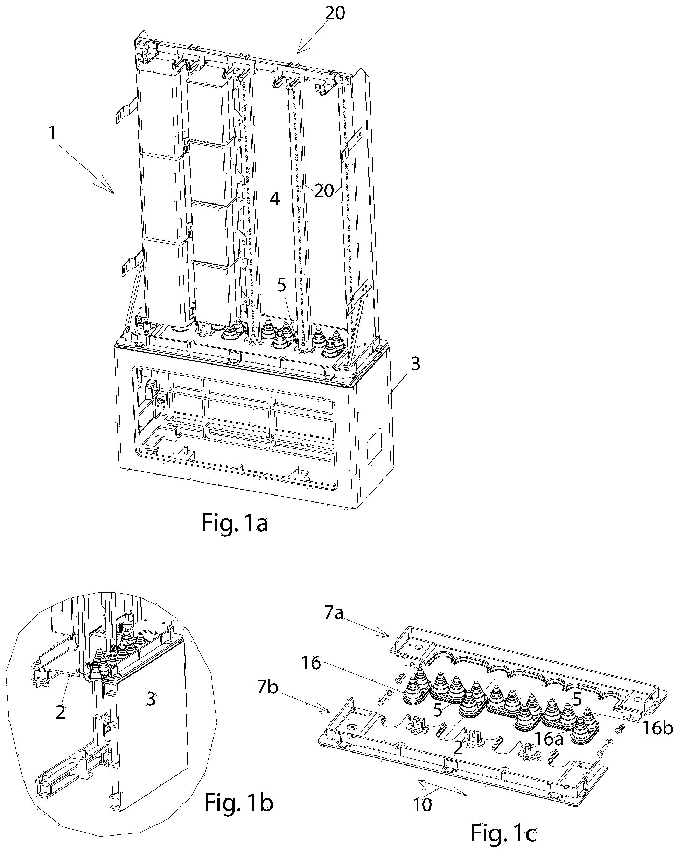

Fig. 1 zeigt eine perspektivische Ansicht eines Schaltschrankes 1 mit Bodenplatte 2, der allgemein mit dem Bezugszeichen 1 bezeichnet wird.

Der Schaltschrank umfasst im Wesentlichen einen Verteilerraum 4, einen darunter liegenden Sockel 3 und eine sich zwischen Verteilerraum 4 und Sockel 3 befindende Bodenplatte 2.

Im Verteilerraum 4 befindet sich der Montagerahmen 20, an dem die einzelnen Blöcke an den Klemmleisten befestigt sind. Der Verteilerraum 4 wird von einem Gehäuse umgeben. An der Außenwand des Gehäuses ist eine äußere Schutzbeplankung angebracht.

Der Sockel 3 wird durch eine Bodenplatte 2 von dem sich darüber befindlichen Verteilerraum 4 abgetrennt. Die Bodenplatte 2 ist als Dichtung und Trennung zwischen dem Verteilerraum 4 und dem Sockel 3 angebracht und
leistet für den Kabelverteilerschrank 1 den Berührungsschutz, den Schutz vor Kondensationswasserbildung etc.

Wie in Fig. 1c gezeigt, besteht die Bodenplatte 2 aus zwei zusammengefügten Teilen 7a und 7b. In der Bodenplatte 2 befinden sich in dem vertieften Mittelbereich mehrere Kabeldurchlässe 5, die langlochförmig ausgebildet sind und eine quer zur Längsrichtung 10 der Bodenplatte 2 stehende Längsachse aufweisen.

Durch die langlochförmige Ausführung der einzelnen Kabeldurchlässe 5 sind diese ausreichend groß ausgebildet, dass darin mehrere Kabel nebeneinander durchgeführt werden können. Die durch die Kabeldurchlässe 5 laufenden Kabel sind mit Kabeltüllen 16 mit kegelförmigen Tüllenstutzen 16a und 16b umgeben. Die Kabeltüllen 16 verschließen die Kabeldurchlässe 5 und dichten somit den Sockel 3 ab.

Mit Schrauben, die in der Längsrichtung der Bodenplatte verlaufen, werden die beiden Teile der Bodenplatte verbunden. Die auf den einzelnen Kabeln befestigten Kabeltüllen 16 mit den Tüllenstutzen 16a und 16b werden beim Zusammensetzen der beiden Teile der Bodenplatte 2 in die Kabeldurchlässe 5 eingesetzt. Dabei sind in der in Fig. 1 c dargestellten Variante die Tüllenstutzen nach oben ausgerichtet. Die Bodenplatte 2 ist mit dem Sockel 3 verschraubt und auf der Bo-denplatte 2 selbst wird das Gehäuse 6, insbesondere der Montagerahmen 20 verschraubt.

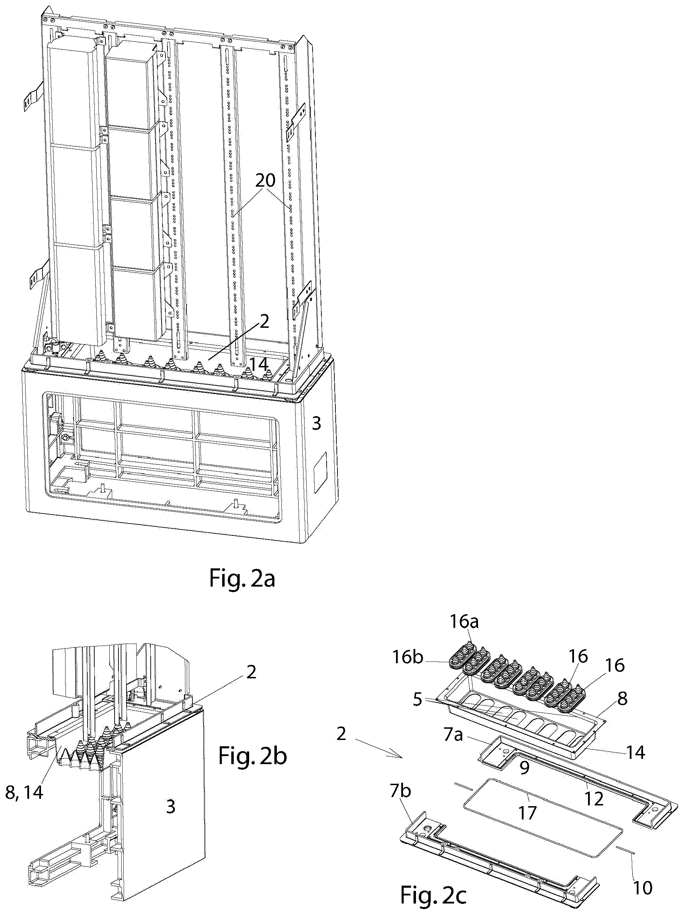

Fig. 2 zeigt eine perspektivische Ansicht eines Schaltschrankes 1 mit Bodenplatte 2, die sich von der in Figur 1 durch das zusätzliche Einsatzteil 8 unterscheidet.

Wie in Fig. 2c gezeigt ist, besteht die Bodenplatte 2 aus einem Rahmen 7, einem Einsatzteil 8, einer Dichtung 17, einigen Kabeltüllen 16 mit Tüllenstutzen 16a und 16b.

Sowohl der Rahmen 7, als auch das darin eingefasste Einsatzteil 8 sind aus Kunststoff, wobei beide aus verschiedenen Kunststoffarten gefertigt sind. Der für das Einsatzteil 8 verwendete Kunststoff ist vorzugsweise elastischer als der für den Rahmen 7 verwendete Kunststoff.

Der Rahmen 7 ist aus zwei C-förmigen und einander ergänzende Rahmenteilen 7a und 7b zusammengesetzt. Der umlaufende Rahmen 7 formt eine Öffnung 9, in die das Einsatzteil 8 gesetzt wird. Die Öffnung 9 auf dem Rahmen 7 wird von einer Dichtungsnut 12 umgeben. Auf diese Dichtungsnut 12 wird das Einsatzteil 8 aufgelegt und am Rahmen 7 verschraubt.

Das Einsatzteil 8 weist einen vertieften Bereich 14 auf, in dem Kabeldurchlässe 5 angeordnet sind.

Diese Kabeldurchlässe 5 sind langlochförmig ausgebildet mit einer Längsachse, die zur Längsrichtung 10 der Bodenplatte 2 quer steht.

Jeder Kabeldurchlass 5 ist mit einer Kabeltülle 16 mit mehreren kegelförmigen Tüllenstutzen 16a und 16b verschließbar. Die Tüllenstutzen 16a und 16b sind in der Abbildung 2c nach oben aufragend angeordnet und werden zusammen mit den Kabeltüllen 16 in die Kabeldurchlässe 5 gedrückt.

Die Bodenplatte 2 ist mit dem Sockel 3 verschraubt und auf der Bodenplatte 2 selbst wird das Gehäuse 6, insbesondere der Montagerahmen 20, verschraubt.

### BEZUGSZEICHENLISTE

- KVS: Kabelverteilerschrank
- 1: Schaltschrank
- 2: Bodenplatte
- 3: Sockel
- 4: Verteilerraum
- 5: Kabeldurchlass
- 6: Gehäuse
- 7: Rahmen
- 7a,b: Teile
- 8: Einsatzteil
- 9: Öffnung
- 10: Längsrichtung
- 12: Dichtungsnut
- 14: vertiefter Bereich
- 16: Kabeltülle
- 16a,b: Tüllenstutzen
- 17: Dichtung
- 20: Montagerahmen

## Patentansprüche

1. Bodenplatten-Anordnung für einen Schaltschrank (1), insbesondere einen Kabelverteilerschrank, zwischen Sockel (3) und Verteilerraum (4), umfassend:
- eine Bodenplatte (2), die aus wenigstens zwei Einzelteilen (7a, 7b) besteht, die im zusammengefügten Zustand wenigstens eine Kabeldurchführungsöffnung (9) in der Bodenplatte (2) bilden, die als ein Kabeldurchlass (5) dient, und
- ein in der Kabeldurchführungsöffnung (9) der Bodenplatte (2) angeordnetes Einsatzteil (8) mit einem vertieften mittleren Bereich (14), in dem wenigstens der wenigstens eine Kabeldurchlass (5) gebildet sind,
**dadurch gekennzeichnet, dass**
- die **Bodenplatte** (2) eine Befestigungsvorrichtung zum **lösbaren Befes**tigen sowohl gegenüber dem Gehäuse des Schaltschrankes **(1) als** auch gegenüber dem Sockel (3) aufweist,
- das Einsatzteil (8) derart ausgebildet ist und so in der Kabeldurchführungsöffnung (9) angeordnet ist, dass sich der wenigstens eine Kabeldurchlass (5) im vertieften mittleren Bereich (14) tiefer als das Niveau der Bodenplatte (2) befindet.

2. Bodenplatten-Anordnung nach Anspruch 1,
**dadurch gekennzeichnet, dass**
die Bodenplatte (2) einen das Einsatzteil (8) außen umgebenden Rahmen (7) bildet.

3. Bodenplatten-Anordnung nach Anspruch 1 oder 2,
**dadurch gekennzeichnet, dass**
die Einzelteile (7a, 7b) aus zwei C-förmigen einander ergänzende Teile sind, von denen keines ringförmig geschlossen ausgebildet ist.

4. Bodenplatten-Anordnung nach einem der vorhergehenden Ansprüche,
**dadurch gekennzeichnet, dass**
sowohl das Bodenteil (2) als auch das Einsatzteil (8) aus Kunststoff, allerdings aus unterschiedlichen Kunststoffen, bestehen und das Einsatzteil aus dem elastischen Kunststoff.

5. Bodenplatten-Anordnung nach einem der vorhergehenden Ansprüche,
**dadurch gekennzeichnet, dass**
die beiden Einzelteile (7a, 7b) der Bodenplatte (2) formschlüssig ineinander verhakt werden können.

6. Bodenplatten-Anordnung nach einem der vorhergehenden Ansprüche,
**dadurch gekennzeichnet, dass**
die Öffnung (9) in der Bodenplatte (2) von einer Dichtungsnut (12) umgeben ist, auf die der umlaufende Rand (13) des Einsatzteiles (8) auflegbar und am Rahmen (7) befestigbar, insbesondere verschraubbar ist.

7. Bodenplatten-Anordnung nach einem der vorhergehenden Ansprüche,
**dadurch gekennzeichnet, dass**
die Kabeldurchlässe (5) langlochförmig ausgebildet sind mit einer Längsachse (5') querstehend zur Längsrichtung (10) der Bodenplatte (2).

8. Bodenplatten-Anordnung nach einem der vorhergehenden Ansprüche,
**dadurch gekennzeichnet, dass**
jeder Kabeldurchlass (5) groß genug ausgebildet ist für das nebeneinander Anordnen von mehreren Kabeln (15).

9. Bodenplatten-Anordnung nach einem der vorhergehenden Ansprüche,
**dadurch gekennzeichnet, dass**
jeder Kabeldurchlass (5) durch eine Kabeltülle (16) mit mehreren kegelförmigen Tüllenstutzen (16a, 16b) verschließbar ist.

10. Bodenplatten-Anordnung nach einem der vorhergehenden Anspräche,
**dadurch gekennzeichnet, dass**
die Kabeltüllen (16) mit nach unten weisenden Tüllenstutzen (16a, 16b) in den Kabeldurchgangsöffnungen (5) angeordnet sind.

11. Kabelverteilerschrank (KVS) mit einem Gehäuse (6), welches dem Verteilerraum (4) umgibt, und einem darunter angeordneten Sockel (3), gegenüber dem der Verteilerraum (4) mittels einer Bodenplatten-Anordnung nach einem der vorhergehenden Ansprüche 1 bis 10 abgetrennt ist.

12. Verfahren zu einem wenigstens teilweisen Austausch einer Bodenplatte (2), die aus zwei Einzelteilen (7a, 7b) besteht, an einem Kabelverteilerschrank (KVS) zwischen Sockel (3) und Verteilerraum (4), wobei in der Bodenplatte (2) wenigstens eine **Kabeldurchlass**-Öffnung (9) vorgesehen ist, in der ein Einsatzteil (8) mit einem mittleren vertieften Bereich (14) angeordnet ist, und wobei in dem vertieften Bereich (14) Kabeldurchlässe (5) vorgesehen sind,
**die folgenden Schritte umfassend:**
- Lösen der Befestigung zwischen **einem** Gehäuse **des Verteilerraumes (4),** insbesondere einschließlich des Montagerahmens (20), und der Bodenplatte (2),
- Lösen der Befestigung zwischen der Bodenplatte (2) und dem Sockel (3),
- voneinander außer Eingriff bringen der Einzelteile (7a, 7b) der Bodenplatte (2) und horizontales Herausziehen zwischen Sockel (3) und Gehäuse,
- Einschieben von neuen, unbeschädigten Einzelteilen (7a,b) zwischen Sockel (3) und Gehäuse und **Verhaken** dieser, sowie in Eingriff bringen der neuen Einzelteile (7a, 7b) mit dem verbleibenden Einsatzteil (8),
- Verschrauben der neuen Bodenplatte (2) gegenüber dem Sockel (3), und
- Verschrauben des Gehäuses, insbesondere des Montagerahmens (20), mit der neuen Bodenplatte (2).

13. Verfahren nach Anspruch 12,
**dadurch gekennzeichnet, dass**
zum Lösen des Montagerahmens (20) von der Bodenplatte (2) zuvor das Gehäuse (6) vom Montagerahmen (20) entfernt wird.

## Claims

1. A base plate arrangement for an electrical cabinet, in particular a cable distribution cabinet, the base plate arranged between a pedestal (3) and a distribution space (4), comprising:
- a base plate (2) including at least two components (7a, 7b) forming at least one cable pass through opening (9) in the base plate (2) in an assembled condition which cable pass through opening is used as at least one cable pass through (5), and
- an insert (8) arranged in the cable pass through opening (9) of the base plate (2) and including a recessed center portion (14) in which at least the at least one cable pass through opening (5) is formed,
**characterized in that**
- the base plate (2) includes an attachment device for disengage able attachment relative to the housing of the electrical cabinet (1) as well as relative to the pedestal (3),
- the insert (8) is configured and arranged in the cable pass through opening (9) so that the at least one cable pass through (5) is arranged in a recessed center portion (14) below a level of the base plate (2).

2. The base plate arrangement according to claim 1, **characterized in that** the base plate (2) forms a frame (7) enveloping the insert (8) on an outside.

3. The base plate arrangement according to claim 1 or 2,
**characterized in that**
the individual components (7a, b) are formed from two C-shaped complementary components wherein none of the components is shaped as a closed ring.

4. The base plate arrangement according to one of the preceding claims,
**characterized in that**
the base plate (2) as well as the insert (8) are made from a plastic material, however from different plastic materials and the insert is made from the elastic plastic material.

5. The base plate arrangement according to one of the preceding claims,
**characterized in that** the two individual components (7a, 7b) of the base plate (2) are interlock able in a form locking manner.

6. The base plate arrangement according to one of the preceding claims, **characterized in that**
the opening (9) in the base plate (2) is enveloped by a sealing groove (12) onto which a circumferential edge (13) of the insert (8) is placeable and attachable at the frame (7) in particular attachable by threaded bolts.

7. The base plate arrangement according to one of the preceding claims,
**characterized in that** the cable pass through openings (5) are configured as slotted holes with a longitudinal axis (5') transversal to the longitudinal direction (10) of the base plate (2).

8. The base plate arrangement according to one of the preceding claims,
**characterized in that** each cable pass through opening (5) is configured large enough for arranging plural cables (15) adjacent to each other.

9. The base plate arrangement according to one of the preceding claims,
**characterized in that** each cable pass through opening (5) is closeable by a cable grommet (16) with plural conical grommet spouts (16a, 16b).

10. The base plate arrangement according to one of the preceding claims,
**characterized in that**
the cable grommet (16) are arranged with the grommet spouts (16a, 16b) oriented downward in the cable pass through openings (5).

11. The cable distribution cabinet (KVS) including a housing (6) which envelops the distribution space (4) and a pedestal (3) arranged below the distribution space (4) wherein the distribution space (4) is separated from the pedestal (3) by the base plate arrangement according to one of the preceding claims 1 - 10.

12. The method for at least partially replacing a base plate (2) made from two individual components (7a, b) at a cable distribution cabinet (KVS) between a pedestal (3) and a distribution space (4), wherein at least one cable pass through opening (9) is arranged in the base plate (2) wherein an insert (8) with a center recessed portion (14) is arranged in the at least one cable pass through opening (9), and wherein cable pass through openings (5) are arranged in the recessed portion (14), the method comprising the steps:
- disengaging an attachment between a housing of the distribution space (4) in particular including the mounting frame (20) and the base plate (2),
- disengaging the attachment between the base plate (2) and the pedestal (3),
- disengaging the individual components (7a, b) of the base plate (2) and horizontally extracting the base plate (2) between the pedestal (3) and the housing,
- inserting new undamaged components (7a, b) between the pedestal (3) and the housing, interlocking the new undamaged components and engaging the new components (7a, b) with the remaining insert (8),
- bolting the new base plate (2) onto the pedestal (3), and
- bolting the housing, in particular the mounting frame (20) together with the new base plate (2).

13. The method according to claim 12, **characterized in that** the housing (6) is removed from the mounting frame (20) before disengaging the mounting frame (20) from the base plate (2).

## Revendications

1. Agencement de plaque de fond pour une armoire de commande (1), en particulier une armoire de distribution de câbles, entre le socle (3) et le compartiment de distribution (4), comprenant :
- une plaque de fond (2), constituée d'au moins deux parties individuelles (7a, 7b) qui forment, en état assemblé, au moins une ouverture de traversée de câbles (9) servant de passage de câbles (5) dans la plaque de fond (2), et
- un insert (8) avec une zone centrale en retrait (14), insert, qui est disposé dans l'ouverture de traversée de câbles (9) de la plaque de fond (2) et dans lequel est formé l'au moins un passage de câbles (5),
**caractérisé en ce que**
- la plaque de fond (2) présente un dispositif de fixation permettant une fixation amovible non seulement au boîtier de l'armoire de commande (1) mais encore au socle (3),
- l'insert (8) est conçu et disposé dans l'ouverture de traversée de câbles (9) de façon que l'au moins un passage de câbles (5) se situe, dans la zone centrale en retrait, à un niveau plus bas que celui de la plaque de fond (2).

2. Agencement de plaque de fond suivant la revendication 1,
**caractérisé en ce que**
la plaque de fond (2) forme un cadre (7) entourant extérieurement l'insert (8).

3. Agencement de plaque de fond suivant la revendication 1 ou 2,
**caractérisé en ce que**
les parties individuelles (7a, 7b) sont deux parties en forme de C qui se complètent, dont aucune ne présente une conception en forme annulaire fermée.

4. Agencement de plaque de fond suivant une des revendications précédentes,
**caractérisé en ce que**
non seulement la partie de fond (2), mais encore l'insert (8) sont réalisés en matière artificielle, toutefois dans des matières artificielles différentes, et l'insert dans la matière artificielle élastique.

5. Agencement de plaque de fond suivant une des revendications précédentes,
**caractérisé en ce que**
les deux parties individuelles (7a, 7b) de la plaque de fond (2) peuvent être accrochées l'une dans l'autre par coopération de formes.

6. Agencement de plaque de fond suivant une des revendications précédentes,
**caractérisé en ce que**
l'ouverture (9) dans la plaque de fond (2) est entourée par une rainure d'étanchéité (12), sur laquelle le bord périphérique (13) de l'insert (8) peut être posé et fixé au cadre (7), notamment par vissage.

7. Agencement de plaque de fond suivant une des revendications précédentes,
**caractérisé en ce que**
les passages de câbles (5) sont conçus en forme de trou oblong avec un axe longitudinal (5') perpendiculaire à la direction longitudinale (10) de la plaque de fond (2).

8. Agencement de plaque de fond suivant une des revendications précédentes,
**caractérisé en ce que**
chaque passage de câbles (5) est conçu suffisamment grand pour y disposer plusieurs câbles (15) les uns à côté des autres.

9. Agencement de plaque de fond suivant une des revendications précédentes,
**caractérisé en ce que**
chaque passage de câbles (5) peut être fermé par un passe-câble (16) avec plusieurs embouts de passe-câble coniques (16a, 16b).

10. Agencement de plaque de fond suivant une des revendications précédentes,
**caractérisé en ce que**
les passe-câbles (16) sont disposés dans les ouvertures de traversée de câbles (9) avec les embouts de passe-câble (16a, 16b) orientés vers le bas.

11. Armoire de distribution de câbles (KVS) avec un boîtier (6), qui entoure le compartiment de distribution (4), et un socle (3) disposé au-dessous de celui-ci, socle, duquel le compartiment de distribution (4) est séparé au moyen d'un agencement de plaque de fond suivant une des revendications précédentes 1 à 10.

12. Procédé d'échange au moins partiel d'une plaque de fond (2), constituée de deux parties individuelles (7a, 7b), d'une armoire de distribution de câbles (KVS), entre le socle (3) et le compartiment de distribution (4), au moins une ouverture de traversée de câbles (9), dans laquelle est disposé un insert (8) avec une zone centrale (14) en retrait, étant prévue dans la plaque de fond (2) et des passages de câbles (5) étant prévus dans la zone en retrait (14),
procédé comprenant les étapes suivantes :
- desserrage de la fixation entre un boîtier du compartiment de distribution (4), notamment avec le cadre de montage (20), et la plaque de fond (2),
- desserrage de la fixation entre la plaque de fond (2) et le socle (3),
- mise hors prise des parties individuelles (7a, 7b) de la plaque de fond (2), l'une de l'autre, et enlèvement de celles-ci de leur emplacement entre le socle (3) et le boîtier en les tirant horizontalement,
- insertion de nouvelles parties individuelles non endommagées (7a, 7b) entre le socle (3) et le boîtier et accrochage de celles-ci, l'une dans l'autre, ainsi que mise en prise des nouvelles parties (7a, 7b) individuelles avec l'insert (8) demeuré en place,
- fixation par vissage de la nouvelle plaque de fond (2) au socle (3) et
- fixation par vissage du boîtier, notamment du cadre de montage (20) à la nouvelle plaque de fond (2).

13. Procédé suivant la revendication 12,
**caractérisé en ce que**
le boîtier (6) est enlevé du cadre de montage (20) préalablement au détachement de celui-ci de la plaque de fond (2).
